(19) Europäisches Patentamt
European Patent Office
Office européen des brevets

(11) **EP 4 394 459 A1**

(12) **EUROPEAN PATENT APPLICATION**
published in accordance with Art. 153(4) EPC

(43) Date of publication:
**03.07.2024 Bulletin 2024/27**

(21) Application number: **22860375.9**

(22) Date of filing: **18.08.2022**

(51) International Patent Classification (IPC):
**G02B 3/14** (2006.01)     **H04N 23/55** (2023.01)

(86) International application number:
**PCT/CN2022/113286**

(87) International publication number:
**WO 2023/025029 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.08.2021   CN 202110976792**

(71) Applicant: **Vivo Mobile Communication Co., Ltd.
Dongguan, Guangdong 523863 (CN)**

(72) Inventor: **SONG, Yalei
Hangzhou, Zhejiang 311121 (CN)**

(74) Representative: **Lavoix
Bayerstraße 83
80335 München (DE)**

(54) **ELECTRONIC DEVICE**

(57)     This application discloses an electronic device, including: a screen substrate layer, where the screen substrate layer has a first region and a second region, and the first region is a light-transmitting region; a liquid lens, where the liquid lens is disposed in the first region, the liquid lens is in the screen substrate layer, and at least part of the first region is deformable; a driving structure, where the driving structure is disposed on a side of the screen substrate layer, and the driving structure is configured to drive the first region to deform, thereby driving the liquid lens to deform; and an imaging sensor, where the imaging sensor is disposed on a side of the screen substrate layer, and the imaging sensor is disposed corresponding to the liquid lens.

FIG. 4

EP 4 394 459 A1

## Description

## CROSS-REFERENCE TO RELATED APPLICATIONS

This application claims priority to Chinese Patent Application No. 202110976792.6, filed on August 24, 2021 in China, which is incorporated herein by reference in its entirety.

## TECHNICAL FIELD

This application belongs to the technical field of terminals, and specifically relates to an electronic device.

## BACKGROUND

With the development of smart terminals, appearances and hand feel of the smart terminals continue upgrading, and users' demands for photographing functions, appearances, and overall hand feel of the smart terminals are also increasingly high. An existing camera module is too large. As a result, an overall thickness cannot be reduced, and an overall structure occupies a large space. A hole for a camera needs to be formed in an appearance of a terminal. As a result, full-screen display cannot be implemented really, affecting a shooting effect.

## SUMMARY

Embodiments of this application aim to provide an electronic device, to resolve the following problems: The structure of an existing camera module is large, a hole needs to be formed for a camera, and full-screen display cannot be implemented really.

According to a first aspect, an embodiment of this application provides an electronic device, including:

a screen substrate layer, where the screen substrate layer has a first region and a second region, and the first region is a light-transmitting region;
a liquid lens, where the liquid lens is disposed in the first region, the liquid lens is in the screen substrate layer, and at least part of the first region is deformable;
a driving structure, where the driving structure is disposed on a side of the screen substrate layer, and the driving structure is configured to drive the first region to deform, thereby driving the liquid lens to deform; and
an imaging sensor, where the imaging sensor is disposed on a side of the screen substrate layer, and the imaging sensor is disposed corresponding to the liquid lens.

The first region includes a first packaging layer and a second packaging layer, the first packaging layer and the second packaging layer are disposed at an interval in a thickness direction of the screen substrate layer, and the liquid lens is between the first packaging layer and the second packaging layer.

The first packaging layer is deformable, the driving structure is configured to drive the first packaging layer to deform, and deformation of the first packaging layer can drive the liquid lens to deform.

The second packaging layer is deformable.

Pixels are distributed in both the first region and the second region that are on the side of the screen substrate layer away from the driving structure. A distribution density of the pixels in the first region of the screen substrate layer is less than a distribution density of the pixels in the second region of the screen substrate layer.

The driving structure includes:

a movable member, where the movable member is disposed on a side of the screen substrate layer, the movable member extends along an edge of the liquid lens, the movable member is movable in a direction of an optical axis of the imaging sensor, and in a case that the movable member moves, the movable member can drive the liquid lens to deform.

The movable member is circular, and an axis of the movable member is parallel to or collinear with the optical axis of the imaging sensor.

The movable member is between the screen substrate layer and the imaging sensor.

The electronic device further includes:

a driving member, where the driving member is configured to drive the movable member to move in the direction of the optical axis of the imaging sensor.

The electronic device further includes

a support layer, where the support layer is disposed on another side of the screen substrate layer.

The electronic device further includes:

a cover plate, where the cover plate is disposed on the side of the support layer away from the screen substrate layer.

The screen substrate layer is a transparent material member.

The electronic device in this embodiment of this application includes: a screen substrate layer, where the screen substrate layer has a first region and a second region, and the first region is a light-transmitting region; a liquid lens, where the liquid lens is disposed in the first region, the liquid lens is in the screen substrate layer, and at least part of the first region is deformable; a driving structure, where the driving structure is disposed on a side of the screen substrate layer, and the driving structure is configured to drive the first region to deform, thereby driving the liquid lens to deform; and an imaging sensor, where the imaging sensor is disposed on a side of the screen substrate layer, and the imaging sensor is disposed corresponding to the liquid lens. In the electronic device in this embodiment of this application, the liquid lens is disposed in the first region that is light-transmitting. The liquid lens is in the screen substrate layer and occupies a small space, so that an overall thickness can be reduced. The driving structure is configured to drive the first region to deform, thereby driving the liquid lens to deform. A focal point can be determined fast based on a fine surface deformation that is generated after the liquid lens is stressed, so that the liquid lens can be focused fast, and the thickness of a module having a telephoto and macro function can be reduced greatly. Pixels may be distributed in both the first region and the second region that are on the side of the screen substrate layer away from the driving structure, so that full-screen display can be implemented really, and no hole needs to be formed in a screen. This can increase the light-sensing area of a camera and a pixel quantity. In addition, a night shooting capability can be improved without sacrificing an appearance, thereby improving a shooting effect.

**BRIEF DESCRIPTION OF DRAWINGS**

FIG. 1 is a schematic exploded diagram of an electronic device according to an embodiment of this application;
FIG. 2 is a schematic diagram of a liquid lens in a screen substrate layer;
FIG. 3 is a schematic diagram of distribution of pixels;
FIG. 4 is another schematic exploded diagram of an electronic device according to an embodiment of this application;
FIG. 5 is a schematic diagram of cooperation between a movable member and a driving member; and
FIG. 6 is a schematic diagram of a liquid lens that deforms.

Reference numerals:

10: screen substrate layer; 11: first packaging layer;
12: second packaging layer; 13: pixel;
20: liquid lens;
30: imaging sensor;
40: movable member; 41: driving member;
50: support layer; and
60: cover plate.

**DESCRIPTION OF EMBODIMENTS**

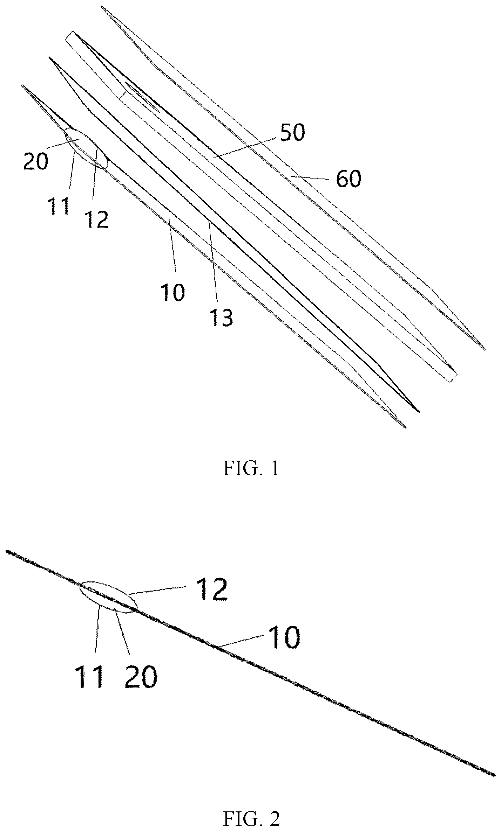

The following clearly and completely describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.
The terms "first", "second", and the like in this specification and claims of this application are used to distinguish between similar objects instead of describing a specific order or sequence. It should be understood that the data used in such a way is interchangeable in proper circumstances so that the embodiments of this application can be implemented in an order other than the order illustrated or described herein. In addition, in this specification and the claims, "and/or" represents at least one of connected objects, and a character "/" generally represents an "or" relationship between associated objects.
With reference to FIG. 1 to FIG. 6, an electronic device in an embodiment of this application is described in detail below based on specific embodiments and application scenarios thereof.
As shown in FIG. 1 to FIG. 6, the electronic device in this embodiment of this application includes a screen substrate layer 10, a liquid lens 20, a driving structure, and an imaging sensor 30. The screen substrate layer 10 may have a first region and a second region. The first region may be a light-transmitting region. For example, the first region may be a region made of a transparent material. The liquid lens 20 is disposed in the first region, so that light can enter the liquid lens 20 conveniently. In addition, the liquid lens 20 may be in the screen substrate layer 10, so that no hole needs to be formed, and an occupied space is small. This facilitates reducing an overall thickness and size. At least part of the first region is deformable. For example, the first region may deform under the action of an external force, so that deformation of the first region drives deformation of the liquid lens 20. Therefore, the liquid lens 20 can be focused. The driving structure may be disposed on a side of the screen substrate layer 10. The driving structure may be configured to drive the first region to deform, thereby driving the liquid lens 20 to deform. The imaging sensor 30 is disposed on a side of the screen substrate layer 10. The imaging sensor 30 may be disposed corresponding to the liquid lens 20. Therefore, light passing through the liquid lens 20 can form an image on the imaging sensor 30. No hole needs to be formed in the first region. Pixels 13 may be distributed in both the first region and the second region that are on the side of the screen substrate layer 10 away from the driving structure. In other words, the pixels may be distributed on the entire surface of the side of the screen substrate layer 10 away from the driving structure, thereby implementing full-screen display really.
In the electronic device in this embodiment of this application, the liquid lens 20 is disposed in the first region that is light-transmitting. The liquid lens 20 may be in the screen substrate layer 10 and occupies a small space, so that an overall thickness can be reduced. The driving structure is configured to drive the first region to deform, thereby driving the liquid lens 20 to deform. A focal point can be determined fast based on a fine surface deformation that is generated after the liquid lens 20 is stressed, so that the liquid lens 20 can be focused fast, and the thickness of a module having a telephoto and macro function can be reduced greatly. No hole needs to be formed in the first region. Pixels may be distributed in both the first region and the second region that are on the side of the screen substrate layer 10 away from the driving structure, so that full-screen display can be implemented really, and no hole needs to be formed in a screen. This facilitates increasing the light-sensing area of a camera and a pixel quantity. In addition, a night shooting capability can be improved without sacrificing an appearance, thereby improving a shooting effect.

In some embodiments, as shown in FIG. 1 and FIG. 2, the first region may include a first packaging layer 11 and a second packaging layer 12. The first packaging layer 11 and the second packaging layer 12 may be disposed at an interval in a thickness direction of the screen substrate layer 10. The thickness direction of the screen substrate layer 10 is a direction perpendicular to the imaging sensor 30. The liquid lens 20 is between the first packaging layer 11 and the second packaging layer 12. The first packaging layer 11 and the second packaging layer 12 may be made of a transparent material. The liquid lens 20 may be packaged by the first packaging layer 11 and the second packaging layer 12. The first packaging layer 11 is deformable. The driving structure is configured to drive the first packaging layer 11 to deform. Deformation of the first packaging layer 11 may drive deformation of the liquid lens 20. Therefore, the liquid lens 20 can be focused fast. In an actual application process, the screen substrate layer 10 may include a first substrate layer and a second substrate layer. Both the first substrate layer and the second substrate layer may be made of a transparent material. The liquid lens 20 may be packaged between the first substrate layer and a second substrate layer.

In some other embodiments, the second packaging layer 12 is also deformable. Deformation of the second packaging layer 12 may also drive the liquid lens 20 to deform. Therefore, the liquid lens 20 can be focused fast.

Pixels may be distributed in both the first region and the second region that are on the side of the screen substrate layer 10 away from the driving structure, so that full-screen display can be implemented really, and no hole needs to be formed in a screen. This facilitates increasing the light-sensing area of a camera and a pixel quantity. In addition, a night shooting capability can be improved without sacrificing an appearance, thereby improving a shooting effect.

The screen substrate layer 10 may be made of a transparent material. A position that is of the second packaging layer 12 and where the liquid lens 20 is packaged may be made of a material that cannot deform, for example, glass, polymethyl methacrylate (Polymethyl Methacrylate, PMMA), or the like. The first packaging layer 11 may use a deformable material (for example, rubber). The liquid lens 20 is packaged in the screen substrate layer 10, so that a light-emitting pixel of the screen can be directly printed on a surface of the transparent second packaging layer 12, thereby implementing full-screen display. A focal length of the liquid lens 20 can be changed by controlling a deformation radian of the first packaging layer 11, thereby implementing a variation between macro and telephoto.

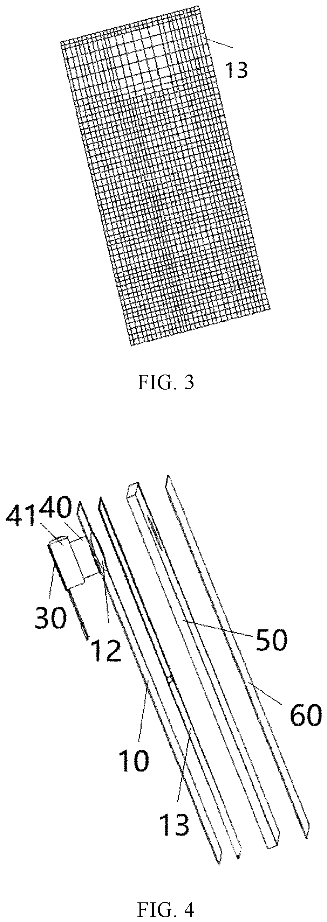

In this embodiment of this application, as shown in FIG. 3, a distribution density of the pixels in the first region of the screen substrate layer 10 is less than a distribution density of the pixels in the second region of the screen substrate layer 10. This can ensure the transmittance of the liquid lens, and reduce an impact on a display effect.

Optionally, as shown in FIG. 4, the imaging sensor 30 may be disposed on a side of the screen substrate layer 10. The imaging sensor 30 may be disposed corresponding to the liquid lens 20. Optical axes of the imaging sensor 30 and the liquid lens 20 may be collinear with each other, so that light entering the liquid lens 20 can form an image by using the imaging sensor 30. The imaging sensor 30 that is configured to receive an optical signal may be connected to a central processing unit (Central Processing Unit, CPU) in a terminal through wiring.

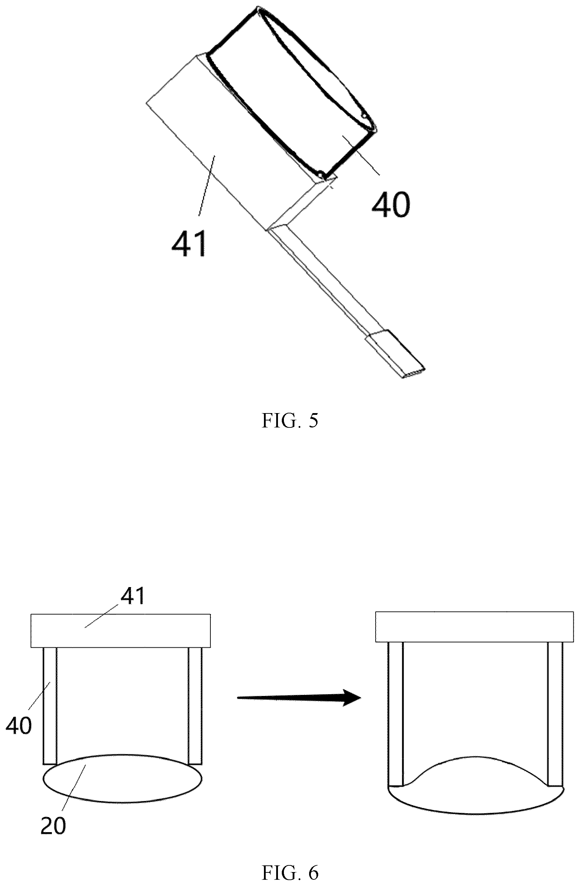

In some embodiments, as shown in FIG. 4 and FIG. 5, the driving structure may include a movable member 40. The movable member 40 may be disposed on a side of the screen substrate layer 10. The movable member 40 may extend along an edge of the liquid lens 20. The movable member 40 is movable in a direction of the optical axis of the imaging sensor 30. In a case that the movable member 40 moves, the movable member 40 can drive the liquid lens 20 to deform. The liquid lens 20 can be focused fast by using deformation of the liquid lens 20. For example, the movable member 40 may extend along the edge of the liquid lens 20 and stop at the first packaging layer 11 in a butting manner. In a case that the movable member 40 moves, the movable member 40 can drive the first packaging layer 11 to deform. Deformation of the first packaging layer 11 may drive deformation of the liquid lens 20. Therefore, the liquid lens 20 can be focused fast.

Optionally, the movable member 40 may be circular, for example, a circular ring or a circular tube. An axis of the movable member 40 is parallel to or collinear with the optical axis of the imaging sensor 30. Therefore, the liquid lens 20 can deform stably to be focused fast.

In some embodiments, as shown in FIG. 4, the imaging sensor 30 may be disposed on a side of the screen substrate layer 10. The imaging sensor 30 may be disposed corresponding to the liquid lens 20. The movable member 40 is between the screen substrate layer 10 and the imaging sensor 30, so that light entering the liquid lens 20 can pass through the movable member 40, and then form an image by using the imaging sensor 30.

Optionally, the electronic device may further include a driving member 41. The driving member 41 is configured to drive the movable member 40 to move in the direction of the optical axis of the imaging sensor 30. In a case that the movable member 40 moves, the movable member 40 can drive the liquid lens 20 to deform. The liquid lens 20 can be focused fast by using deformation of the liquid lens 20. The driving member 41 may be a driving motor or a piezoelectric ceramic driving mechanism, or may be an electrostrictive material sheet. The electrostrictive material sheet may deform in a case that a voltage is exerted thereon. Deformation generated by the electrostrictive material sheet may drive the movable member 40 to move.

In an application process, a calculation formula of a focal length of the liquid lens may be as follows:

$$f = (n_L - 1)(\frac{1}{r_1} - \frac{1}{r_2}) + \frac{(n_L - 1)^2 d}{n_L r_1 r_2},$$

where

$f$ denotes the focal length, $d$ denotes a thickness of the liquid lens, $r_1$ and $r_2$ respectively denote curvature radii of two surfaces of the liquid lens, and $n_L$ denotes a refractive index of the liquid lens.

When the focal length is adjusted, a variation of the liquid lens 20 may be shown in FIG. 6. When the focal length is adjusted, the driving member 41 drives the movable member 40 to move. The movable member 40 compresses a tensile surface of the liquid lens 20, making the liquid lens 20 deform. Therefore, curvatures of the two surfaces of the liquid lens 20 may vary, thereby implementing a variation of the focal length. A focal length after the compression and the deformation may be as follows:

$$f' = (n_L - 1)(\frac{1}{r_1} - \frac{1}{r_2'}) + \frac{(n_L - 1)^2 d}{n_L r_1 r_2'},$$

where

$f$ denotes the focal length, $d$ denotes the thickness of the liquid lens, $r_1$ and $r_2'$ respectively denote curvature radii of the two surfaces of the liquid lens after the deformation, and $n_L$ denotes the refractive index of the liquid lens. In a use process, the deformation of the liquid lens 20 may be adjusted based on an actual situation, so that the liquid lens 20 can reach a required focal length.

According to some embodiments, the electronic device may further include a support layer 50. The support layer 50 may be disposed on another side of the screen substrate layer 10. The support layer 50 may have a support function to ensure specific strength. The support layer 50 may be adhered to the another side of the screen substrate layer 10 by using an adhesive. For example, the support layer 50 is adhered to the another side of the screen substrate layer 10 by using an optically clear adhesive. The liquid lens 20 and the screen substrate layer 10 may be directly packaged in the support layer 50. The support layer 50 may also use a transparent material.

Optionally, the electronic device further includes a cover plate 60. The cover plate 60 may be disposed on the side of the support layer 50 away from the screen substrate layer 10. The cover plate 60 may be a glass plate, has a protective effect, and can ensure overall strength of a terminal, thereby further enhancing reliability.

In some embodiments, the screen substrate layer 10 may be a transparent material member having high light transmittance, for example, a transparent plastic member.

The embodiments of this application are described above with reference to the accompanying drawings. However, this application is not limited to the foregoing specific implementations. The foregoing specific implementations are merely illustrative instead of restrictive. Under the enlightenment of this application, a person of ordinary skill in the art may make many forms without departing from the essence of this application and the protection scope of the claims, all of which fall within the protection of this application.

**Claims**

1. An electronic device, comprising:

   a screen substrate layer, wherein the screen substrate layer has a first region and a second region, and the first region is a light-transmitting region;
   a liquid lens, wherein the liquid lens is disposed in the first region, the liquid lens is in the screen substrate layer, and at least part of the first region is deformable;
   a driving structure, wherein the driving structure is disposed on a side of the screen substrate layer, and the driving structure is configured to drive the first region to deform, thereby driving the liquid lens to deform; and
   an imaging sensor, wherein the imaging sensor is disposed on a side of the screen substrate layer, and the imaging sensor is disposed corresponding to the liquid lens.

2. The electronic device according to claim 1, wherein the first region comprises a first packaging layer and a second packaging layer, the first packaging layer and the second packaging layer are disposed at an interval in a thickness direction of the screen substrate layer, and the liquid lens is between the first packaging layer and the second packaging layer; and
   the first packaging layer is deformable, the driving structure is configured to drive the first packaging layer to deform, and deformation of the first packaging layer is capable of driving the liquid lens to deform.

3. The electronic device according to claim 2, wherein the second packaging layer is deformable.

4. The electronic device according to claim 1, wherein pixels are distributed in both the first region and the second region that are on the side of the screen substrate layer away from the driving structure.

5. The electronic device according to claim 4, wherein a distribution density of the pixels in the first region of the screen substrate layer is less than a distribution density of the pixels in the second region of the screen substrate layer.

6. The electronic device according to claim 1, wherein the driving structure comprises:
   a movable member, wherein the movable member is disposed on a side of the screen substrate layer, the movable member extends along an edge of the liquid lens, the movable member is movable in a direction of an optical axis of the imaging sensor, and in a case that the movable member moves, the movable member is capable of driving the liquid lens to deform.

7. The electronic device according to claim 6, wherein the movable member is circular, and an axis of the movable member is parallel to or collinear with the optical axis of the imaging sensor.

8. The electronic device according to claim 6, wherein the movable member is between the screen substrate layer and the imaging sensor.

9. The electronic device according to claim 6, wherein the electronic device further comprises:
   a driving member, wherein the driving member is configured to drive the movable member to move in the direction of the optical axis of the imaging sensor.

10. The electronic device according to claim 1, wherein the electronic device further comprises:
    a support layer, wherein the support layer is disposed on another side of the screen substrate layer.

11. The electronic device according to claim 10, wherein the electronic device further comprises:
    a cover plate, wherein the cover plate is disposed on the side of the support layer away from the screen substrate layer.

12. The electronic device according to claim 1, wherein the screen substrate layer is a transparent material member.

FIG. 1

FIG. 2

FIG. 3

FIG. 4

FIG. 5

FIG. 6

## INTERNATIONAL SEARCH REPORT

| International application No. |
|---|
| **PCT/CN2022/113286** |

**A. CLASSIFICATION OF SUBJECT MATTER**

H04N 5/225(2006.01)i; H04M 1/02(2006.01)i

According to International Patent Classification (IPC) or to both national classification and IPC

**B. FIELDS SEARCHED**

Minimum documentation searched (classification system followed by classification symbols)

H04N5/-; H04M1/-

Documentation searched other than minimum documentation to the extent that such documents are included in the fields searched

Electronic data base consulted during the international search (name of data base and, where practicable, search terms used)

WPABSC; CNTXT; ENTXTC; CNKI; VEN; USTXT; WOTXT; IEEE: 全面屏, 透光, 透明, 柔性, 变形, 形变, 液态, 液体, 镜头, 透镜, 聚焦, 变焦, 对焦, 驱动, full screen, light, transmit+, flexib+, deformation, liquid, lens, focus+, driv+

**C. DOCUMENTS CONSIDERED TO BE RELEVANT**

| Category* | Citation of document, with indication, where appropriate, of the relevant passages | Relevant to claim No. |
|---|---|---|
| PX | CN 113691714 A (VIVO MOBILE COMMUNICATION (HANGZHOU) CO., LTD.) 23 November 2021 (2021-11-23)<br>  claims 1-12 | 1-12 |
| PX | CN 113676579 A (VIVO COMMUNICATION TECHNOLOGY CO., LTD.) 19 November 2021 (2021-11-19)<br>  description, paragraphs [0057]-[0075] | 1-12 |
| Y | WO 2021056540 A1 (GUANGDONG OPPO MOBILE TELECOMMUNICATIONS CORP., LTD.) 01 April 2021 (2021-04-01)<br>  description, paragraphs [0034]-[0036] and [0054]-[0062], and figures 1 and 5 | 1-12 |
| Y | JP 2001249202 A (JAPAN SCIENCE & TECHNOLOGY CORP..) 14 September 2001 (2001-09-14)<br>  description, paragraphs [0007] and [0011], and figure 6 | 1-12 |
| A | CN 209928406 U (NINGBO SUNNY OPTICAL TECHNOLOGY CO., LTD.) 10 January 2020 (2020-01-10)<br>  entire document | 1-12 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 November 2022** | **21 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/113286**

**C.      DOCUMENTS CONSIDERED TO BE RELEVANT**

| Category* | Citation of document, with indication, where appropriate, of the relevant passages | Relevant to claim No. |
|---|---|---|
| A | CN 101604035 A (HONGFUJIN PRECISION INDUSTRY (SHENZHEN) CO., LTD. et al.) 16 December 2009 (2009-12-16) entire document | 1-12 |
| A | CN 111505859 A (BEIJING XIAOMI MOBILE SOFTWARE CO., LTD.) 07 August 2020 (2020-08-07) entire document | 1-12 |

Form PCT/ISA/210 (second sheet) (January 2015)

**INTERNATIONAL SEARCH REPORT**
**Information on patent family members**

International application No.

**PCT/CN2022/113286**

| Patent document cited in search report | | | Publication date (day/month/year) | Patent family member(s) | | | Publication date (day/month/year) |
|---|---|---|---|---|---|---|---|
| CN | 113691714 | A | 23 November 2021 | None | | | |
| CN | 113676579 | A | 19 November 2021 | None | | | |
| WO | 2021056540 | A1 | 01 April 2021 | CN | 114223190 | A | 22 March 2022 |
| JP | 2001249202 | A | 14 September 2001 | None | | | |
| CN | 209928406 | U | 10 January 2020 | None | | | |
| CN | 101604035 | A | 16 December 2009 | US | 2009310224 | A1 | 17 December 2009 |
| | | | | US | 7768713 | B2 | 03 August 2010 |
| CN | 111505859 | A | 07 August 2020 | US | 2020249525 | A1 | 06 August 2020 |
| | | | | EP | 3690528 | A1 | 05 August 2020 |
| | | | | US | 11294226 | B2 | 05 April 2022 |
| | | | | EP | 3690528 | B1 | 01 June 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110976792